# EUROPÄISCHE PATENTANMELDUNG

(11) **EP 0 995 543 A2**
(43) Veröffentlichungstag der Anmeldung: **26.04.2000**
(21) Anmeldenummer: 99890315.7
(22) Anmeldetag: 30.09.1999
(51) Int. Cl.: B23Q 11/00, F16D 9/00

(54) **Sicherheitseinrichtung**

(30) Priorität: 21.10.1998 AT 176898
(71) Anmelder: Ernst Krause & Co., 1021 Wien (AT)
(72) Erfinder: Holy, Franz, 2000 Stockerau (AT); Steiner, Karl, 1230 Wien (AT)
(74) Vertreter: Müllner, Erwin, Dr.

(57) **Zusammenfassung**

Eine Sicherheitseinrichtung, insbesondere zur Schadensminimierung bei Kollisionen, für Werkzeugmaschinen, Manipulatoren oder Vorrichtungen mit stabkinematischer Positionierung von Werkzeug und Werkstück oder von Bauteilen relativ zueinander, ist mit Stäben (6, 7) der Stabkinematik ausgestattet, die an den Enden Gelenke (4, 8; 5, 9) einerseits zur Verbindung mit einem Schlitten (3) oder einer Stelleinrichtung und anderseits zu einer Trägerplatte (10) aufweisen. Diese Stäbe (6, 7) sind zur Kraftbegrenzung zumindest zweigeteilt und insbesondere teleskopartig ausgebildet, wobei die Verbindung eine Sollbruchstelle, beispielsweise mittels eines Scherstiftes (16), aufweist. Eine Bremseinrichtung kann zum Abbau der kinetischen Energie der Sollbruchstelle parallel geschaltet sein. Dabei ist eine Bremsstange (18) vorzugsweise mit Spiel an der einen Stabhälfte (14) und Bremsbacken (19) an der anderen Stabhälfte (15) angebracht.

## Beschreibung

Die Erfindung betrifft eine Sicherheitseinrichtung, insbesondere zur Schadensminimierung bei Kollisionen, für Werkzeugmaschinen, Manipulatoren oder Vorrichtungen mit stabkinematischer Positionierung von Werkzeug und Werkstück bzw. Bauteilen relativ zueinander, wobei eine Trägerplatte am freien Ende mehrerer Stäbe gelenkig gelagert ist und die Stäbe selbst fußseitig ebenfalls gelenkig auf mehreren Schlitten oder Stelleinrichtungen angeordnet sind.

Neben dem seriellen, kartesischen Schlittenaufbau bei Werkzeugmaschinen oder Manipulatoren mit einem z-Schlitten, der den x-Schlitten trägt, auf den der y-Schlitten angeordnet ist, gewinnt die Parallelstabkinematik an Bedeutung. Dabei wird beispielsweise eine die Frässpindel tragende Trägerplatte durch drei Paare von Stäben im Raum festgelegt, wobei die Stäbe einerseits auf der Trägerplatte und anderseits paarweise auf je einem Schlitten angelenkt sind. Durch Verfahren der Schlitten in ihren linearen Führungen, verschieben sich die Stabpositionen und damit ändert sich die Lage der Platte im Raum.

Neben diesen 3-achsigen Systemen sind Anordnungen mit sechs unabhängig steuerbaren Stäben ebenfalls bekannt. Durch die parallele Krafteinleitung kann insgesamt mit höheren Kräften aber auch mit höheren Geschwindigkeiten gearbeitet werden. Die Wünsche nach hohen Beschleunigungen sind ebenso erfüllbar wie jene nach besonderer Steifigkeit, um nur einige zu nennen. Es ist klar, dass all diese Parameter zwar einen Bearbeitungszyklus in beeindruckender Weise optimieren können. Damit verbunden sind aber auch Gefahren, die beispielsweise bei Kollisionen auf der Werkzeugmaschine infolge der äußerst großen Kräfte und Geschwindigkeiten auftreten, um ein Vielfaches größer.

Im Normalbetrieb eines Bearbeitungszentrums mit Parallelstabkinematik werden beispielsweise alle Bewegungen im Abstand von 5 ms kontrolliert. Wird eine Abweichung zwischen der Soll- und der Istposition verfahrbarer Bauteile festgestellt, so erfolgt eine Stillsetzung im Regelkreis. Die Reaktionszeit beträgt bei einem ausgeführten Bearbeitungszeitraum beispielsweise 3 ms. Wäre ein Not-Aus Befehl, z.B. über die Schlagtaste erfolgt, so müsste mit einer Reaktionszeit von 8 ms gerechnet werden, in der die Bewegungsabläufe immer noch fortgesetzt erfolgen. Der Reaktionsweg ist bei Geschwindigkeiten von 80m/min demnach 4 bzw. 10,7 mm. Bei einer Bremsverzögerung von 25 m/s² schließt an den Reaktionsweg ein Verzögerungsweg von 35,6 mm an. Daraus resultiert ein Anhalteweg von rund 40 bis 50 mm. Wenn die kinetische Energie eines Stellsystems beispielsweise 8,7 kNm beträgt und die Notwendigkeit besteht, innerhalb von 3 mm anzuhalten, weil dieser Weg im Falle einer Kollision für den Bereich des geringen Schadens verfügbar ist, dann ergibt sich eine Rückhaltekraft von 2900 kN. Natürlich können solche Kräfte von den Komponenten der Stabkinematik nicht aufgenommen werden. Es müssen Maßnahmen getroffen werden, die sicherstellen, dass die Rückhaltekraft in den Stäben und Gelenken innerhalb des stabkinematischen Systems einen zulässigen Wert (beispielsweise 40 kN) nicht übersteigt. Diese Aufgabe wird erfindungsgemäß dadurch gelöst, dass zur Begrenzung von Zug- oder Druckkräften die Stäbe der Stabkinematik zwischen den Gelenken geteilt, insbesondere zweigeteilt sind und die Verbindung der Teile eine Sollbruchstelle aufweist. Bei Überschreiten des Grenzwertes kann somit eine unerwünschte Kraftübertragung, die im Kollisionsfall über den gesamten Weg zerstörend wirkt, unterbunden werden. Es ist zweckmäßig, wenn als Sollbruchstelle eine Verbindung der Teile, insbesondere der Stabhälften mit einem Scherstift vorgesehen ist. Bei einem konkreten Ausführungsbeispiel sind die Teile der Stäbe, insbesondere die Stabhälften, teleskopartig ineinander gelagert. Dadurch entfällt ein Ausschwenken der Stabhälften im Falle der Trennung an der Sollbruchstelle. Es werden die Stabhälften einfach ineinander geschoben oder auseinander gezogen. Hier sei vermerkt, dass bei Stabkinematiksystemen in den einzelnen Stäben, welche die Trägerplatte für das Werkzeug in seine räumlich vorbestimmte Position bringen, völlig unterschiedliche Kraftrichtungen vorliegen. Für eine bestimmte Werkzeugposition können in den einen Stäben Druckkräfte und in den anderen Stäben Zugkräfte auftreten. Dadurch ist der teleskopartige Aufbau jedes Stabes besonders zweckmäßig.

Um bei Bruch des Scherstiftes oder dergleichen sofort eine Reaktion der Steuerung zu veranlassen, ist ein Sensor zur Feststellung einer Relativbewegung der Teile, insbesondere der Stabhälften und zur sofortigen Stillsetzung der Antriebe der Schlitten vorgesehen.

Der Anhalteweg wird in zweckmäßiger Weise dadurch reduziert, dass eine Bremseinrichtung zum Abbau der kinetischen Energie der Schub- oder Zugkräfte der Sollbruchstelle parallel geschaltet ist. Damit ist es oftmals möglich, den unvermeidlichen Anhalteweg auf eine Länge zu reduzieren, die nur geringen Schaden im Kollisionsfall verursacht. Eine Ausführungsform sieht vor, dass die Bremseinrichtung eine Bremsstange und an dieser reibungsschlüssig anliegende Bremsbacken umfasst, wobei die Bremsstange mit der einen Stabhälfte und die Bremsbacken mit der anderen Stabhälfte in Verbindung stehen. Um sicherzustellen, dass der Bruch der Sollbruchstelle gezielt und nicht bereits durch die parallel geschaltete Bremseinrichtung beeinflusst erfolgt, sollte die Bremsstange mit Spiel (Langloch) an die Stabhälfte angeschlossen sein. Dieses Spiel macht die Bremseinrichtung unmittelbar beim Bruch vorerst noch unwirksam. Die Bremswirkung soll jedoch danach sofort einsetzen, damit kein Bremsweg verloren geht. Daher ist es zweckmäßig, wenn das Spiel etwa dem Verformungsweg der Stabhälften bis zum Bruch der Sollbruchstelle, insbesondere des Scherstiftes, entspricht. Scherstifte werden bekanntlich aus sprödem Material, wie z.B. Gusseisen, hergestellt, sodass der Bruch bereits bei sehr geringer Verformung eintritt. Damit kann auch das Spiel sehr klein gehalten und der Bremsweg optimiert werden.

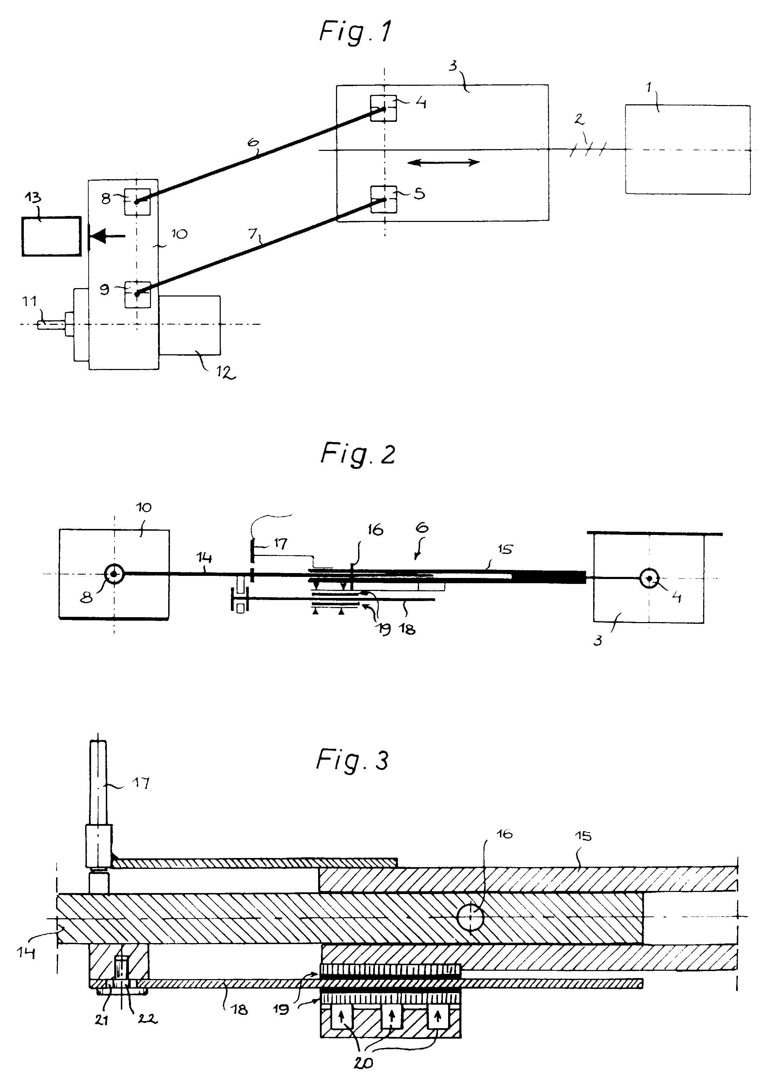

Die Erfindung wird nachstehend anhand der Zeichnungen beschrieben. Fig. 1 zeigt ein stabkinematisches System bei Kollision, Fig. 2 eine Sicherheitseinrichtung gemäß der Erfindung in schematischer Darstellung und Fig. 3 ein Detail aus Fig. 2 im Längsschnitt.

Ein stabkinematisches System an einer Werkzeugmaschine umfasst gemäß Fig. 1 einen Kugelgewindeantrieb mit einem Antriebsmotor 1 für eine Kugelrollspindel 2 zum Verschieben eines Schlittens 3. Selbstverständlich ist für den Antrieb des Schlittens 3 auch ein Linearmotor vorstellbar. Der Schlitten 3 trägt bei dieser Anordnung Gelenke 4, 5 am Fußpunkt von Stäben 6, 7, deren Enden über weitere Gelenke 8, 9 mit einer Trägerplatte 10 verbunden sind. Auf der Trägerplatte 10 ist als Werkzeug ein Fräser 11 sowie ein Fräserantrieb 12 vorgesehen. Nicht dargestellt sind weitere Parallelstäbe, die über z.B. zwei Schlitten ähnlich dem Schlitten 3 in anderen Ebenen oder Achsenrichtungen verfahrbar sind. Zwei Paar zusätzlicher Parallelstäbe greifen ähnlich den Stäben 6, 7 ebenfalls an der Trägerplatte 10 an und damit legen sechs Stäbe deren Position sowie die Werkzeugposition (Fräserposition 11) im Raum fest. Mehr als 3-achsige Systeme haben sechs einzeln angetriebene Stäbe.

Ein Gegenstand 13 befindet sich im Kollisionsbereich der Trägerplatte 10. Ein weiterer Vorschub des Schlittens 3 führt zur Kollision. Die heute insbesondere von Werkzeugmaschinen aber auch von Manipulatoren geforderten Geschwindigkeiten, Beschleunigungen und Kräfte werden von Stabkinematiksystemen noch überboten und diesen Systemen auch abverlangt. Dabei muss jedoch die Betriebssicherheit ohne Einschränkung erhalten bleiben.

Fig. 2 zeigt zur Bauteilesicherung eine Kraftbegrenzungseinrichtung, die für einen Stab schematisch dargestellt, jedoch in jedem Stab des Parallelstabsystems vorgesehen ist. Der Stab 6, der an seinen beiden Enden mittels der Gelenke 4 und 8 einerseits auf den Schlitten 3 bzw. bei mehrachsigen Systemen auf einem Gestellbauteil und anderseits auf der Trägerplatte 8 gelagert ist, weist Teleskopform auf und besteht aus zwei Stabhälften 14, 15, die mittels eines Scherstiftes 16 verbunden sind. Wenn die Kraft zwischen dem Gelenk 4 und dem Gelenk 8 zu groß wird, dann erfolgt eine Trennung des Kraftflusses durch Bruch des Scherstiftes 16 bzw. der entsprechenden Sollbruchstelle oder Sollbruchstellen. Je nach Belastungsfall (Zug, Druck) werden die Stabhälften 14, 15 auseinander gezogen oder zusammengeschoben. Ein Sensor 17 stellt die Relativbewegung fest und löst eine geregelte Stillsetzung des Antriebs 1 bzw. der Antriebe aller Schlitten aus. Damit tragen im Kollisionsfall die dem Stab nachgeordneten Bauteile zum schadenzufügenden Kräfteaufbau nicht weiter bei. Eine Stillsetzung der Antriebe ist nur dann möglich, wenn die Steuerung ordnungsgemäß arbeitet, also diesbezüglich z.B. kein Energieausfall vorliegt.

Fig. 2 und 3 zeigen ferner eine der Sollbruchstelle parallel geschaltete, jedoch an den Bruch anschließend zur Wirkung kommende Bremseinrichtung. Diese umfasst eine mit der Stabhälfte 14 mit axialem Spiel verbundene Bremsstange 18, an der Bremsbacken 19 angreifen, die von einem Federpaket 20 angedrückt werden. Die Bremsbacken 19 sind mit der Stabhälfte 15 fest verbunden. Das erwähnte Spiel kommt durch ein axiales Langloch 21 zu Stande, in welches ein Verbindungsbolzen 22 zur Stabhälfte 14 eingreift. Im Kollisionsfall bricht der Scherstift 16 ohne paralleler Bremswirkung, weil der Verformungsweg bis zum Bruch des Scherstiftes in Achsenrichtung der Stabhälften 14, 15 kleiner ist, als das Spiel. Letzteres ergibt sich infolge des beiderseitigen Abstandes des Verbindungsbolzens 22 zu den Enden des Langlochs 21. Dadurch wird die Bremsstange 18 erst mitgeschleppt, sobald der Bruch erfolgt ist. Die Bremskraft kann so dimensioniert werden, dass minimale Verschiebungswege, die allenfalls konstruktiv von der Gelenklagerung aufgefangen werden, zur Schadensminimierung eingehalten werden.

## Patentansprüche

1. Sicherheitseinrichtung, insbesondere zur Schadensminimierung bei Kollisionen, für Werkzeugmaschinen, Manipulatoren oder Vorrichtungen mit stabkinematischer Positionierung von Werkzeug und Werkstück bzw. Bauteilen relativ zueinander, wobei eine Trägerplatte am freien Ende mehrerer Stäbe gelenkig gelagert ist und die Stäbe selbst fußseitig ebenfalls gelenkig auf mehreren Schlitten oder Stelleinrichtungen angeordnet sind, **dadurch gekennzeichnet**, dass zur Begrenzung von Zug- oder Druckkräften die Stäbe (6, 7) der Stabkinematik zwischen den Gelenken (4, 8; 5, 9) geteilt, insbesondere zweigeteilt sind und die Verbindung der Teile eine Sollbruchstelle aufweist.

2. Sicherheitseinrichtung nach Anspruch 1, **dadurch gekennzeichnet**, dass als Sollbruchstelle eine Verbindung der Teile, insbesondere der Stabhälften (14, 15) mit einem Scherstift (16) vorgesehen ist.

3. Sicherheitseinrichtung nach den Ansprüchen 1 oder 2, **dadurch gekennzeichnet**, dass die Teile der Stäbe (6, 7), insbesondere die Stabhälften (14, 15), teleskopartig ineinander gelagert sind.

4. Sicherheitseinrichtung nach einem der Ansprüche 1 bis 3, **dadurch gekennzeichnet**, dass ein Sensor (17) zur Feststellung einer Relativbewegung der Teile, insbesondere der Stabhälften (14, 15) und zur sofortigen Stillsetzung der Antriebe (1) der Schlitten (3) vorgesehen ist.

5. Sicherheitseinrichtung nach einem der Ansprüche 1 bis 4, **dadurch gekennzeichnet**, dass eine Bremseinrichtung zum Abbau der kinetischen Energie der Schub- oder Zugkräfte der Sollbruchstelle parallel geschaltet ist.

6. Sicherheitseinrichtung nach Anspruch 5, **dadurch gekennzeichnet**, dass die Bremseinrichtung eine Bremsstange (18) und an dieser reibungsschlüssig anliegende Bremsbacken (19) umfasst, wobei die Bremsstange (18) mit der einen Stabhälfte (14) und die Bremsbacken (19) mit der anderen Stabhälfte (15) in Verbindung stehen.

7. Sicherheitseinrichtung nach Anspruch 6, **dadurch gekennzeichnet**, dass die Bremsstange (18) mit Spiel (Langloch 21) an die Stabhälfte (14) angeschlossen ist.

8. Sicherheitseinrichtung nach Anspruch 7, **dadurch gekennzeichnet**, dass das Spiel etwa dem Verformungsweg der Stabhälften (14, 15) bis zum Bruch der Sollbruchstelle, insbesondere des Scherstiftes (16), entspricht.
